# EUROPÄISCHE PATENTSCHRIFT

(11) **EP 4 725 068 B1**
(45) Veröffentlichungstag und Bekanntmachung des Hinweises auf die Patenterteilung: **30.09.2026**
(21) Anmeldenummer: 24732572.3
(22) Anmeldetag: 07.06.2024
(51) Int. Cl.: H01M 10/613, H01M 10/6556, H01M 10/6557, H01M 50/204, H01M 50/264, H01M 50/291, H01M 50/293

(54) **KOMPRESSIONSPAD ZUR BEABSTANDETEN ANORDNUNG VON BATTERIEZELLEN UND VERFAHREN ZUR HERSTELLUNG EINES SOLCHEN, SOWIE EIN BATTERIEPACK MIT EINEM SOLCHEN KOMPRESSIONSPAD**
COMPRESSION PAD FOR ARRANGING BATTERY CELLS IN A SPACED MANNER AND METHOD FOR PRODUCING SAME, AND BATTERY PACK HAVING SUCH A COMPRESSION PAD
TAMPON DE COMPRESSION POUR AGENCER DES ÉLÉMENTS DE BATTERIE AVEC ESPACEMENT ET SON PROCÉDÉ DE PRODUCTION, ET BLOC-BATTERIE COMPRENANT UN TEL TAMPON DE COMPRESSION

(30) Priorität: 09.06.2023 DE 102023115159
(43) Veröffentlichungstag der Anmeldung: 15.04.2026
(73) Patentinhaber: Carcoustics TechConsult GmbH, 51381 Leverkusen (DE)
(72) Erfinder: LENTJES, Christoph, 47839 Krefeld (DE); LEIB, Ines, 50672 Köln (DE); SCHÖNZART, Paul, 51381 Leverkusen (DE); TERHORST, Michael, 52074 Aachen (DE)
(74) Vertreter: Patentanwälte Bauer Vorberg Kayser
(86) Internationale Anmeldenummer: PCT/EP2024/065731
(87) Internationale Veröffentlichungsnummer: WO 2024/251945

(56) Entgegenhaltungen:
- CN-U- 219 144 372
- US-A1- 2013 252 063
- US-A1- 2021 249 662

## Beschreibung

Die Erfindung betrifft ein Kompressionspad zur beabstandeten Anordnung von Batteriezellen in einem Batteriepack. Die vorliegende Erfindung betrifft ferner ein Verfahren zur Herstellung eines solchen Kompressionspads, sowie ein Batteriepack mit mehreren Batteriezellen, welche mit wenigstens einem solchen Kompressionspad beabstandet zueinander angeordnet sind.

Auf dem technischen Gebiet der Fahrzeugtechnik werden mehr und mehr Batteriepacks eingesetzt, welche aus einer Vielzahl von einzelnen Batteriezellen zusammengesetzt sind. Dazu sind die einzelnen Batteriezellen in der Regel in einem Gehäuse zu einem Batteriepack zusammengesetzt. Dabei ist es wichtig, dass die Batteriezellen im Gehäuse sicher positioniert sind.

Der Begriff Batterie wird in diesem technischen Gebiet synonym mit dem Begriff Akkumulator oder Akku verwendet, so dass unter einer Batterie insbesondere auch ein wiederaufladbarer Akkumulator zu verstehen ist.

Die Batteriezellen unterliegen zudem Temperaturschwankungen, die zu einer Temperaturausdehnung führen. Auch neigen die Batteriezellen je nach verwendetem Batterie-Typ dazu bei der Ladung und Entladung zu atmen, sich also auszudehnen und wieder zusammenzuziehen, oder sich aufgrund von Alterungsprozessen und/oder bei unsachgemäßer Handhabung auszudehnen bzw. nicht wieder in die Ursprungsform zusammenzuziehen. Besonders stark ausgeprägt ist dieses Ausdehnungsverhalten bei Lithium-basierten Batterien.

Eine gewisse mechanische Kompression der Batteriezellen kann die Batteriezellen bei diesem Ausdehnen und Zusammenziehen unterstützen, und so die Effizienz der Batteriezellen steigern, sowie die Leistungsfähigkeit bzw. Kapazität gegen Ende ihres Lebenszyklus verbessern. Hierdurch kann die Lebensdauer der Batteriezellen erhöht werden.

Daher werden im Stand der Technik Kompressionspads in den Batteriepacks eingesetzt, welche zwischen den Batteriezellen und zwischen den Batteriezellen und dem Gehäuse angeordnet werden. Diese Kompressionspads weisen eine gewisse Drucksteifigkeit bzw. anders ausgedrückt eine gewisse Nachgiebigkeit auf, die es erlaubt, die Batteriezellen gegeneinander und gegen das Gehäuse mit einer gewissen Druckspannung vorzuspannen und so insbesondere die Batteriezellen beim Ausdehnen und Zusammenziehen zu unterstützen. Die Nachgiebigkeit der Kompressionspads ermöglicht es, im Gegensatz zu einer starren Anordnung, dass sich die Batteriezellen - insbesondere gegen die elastische Kraft der Kompressionspads - ausdehnen und - insbesondere unterstützt durch die elastische Kraft der Kompressionspads - wieder zusammenziehen können. Auch kann das Auftreten von zu hohen Druckspannungen zwischen den Batteriezellen oder dem Gehäuse vermieden werden.

Die Ausdehnung der Batteriezellen findet jedoch nicht homogen in alle Raumrichtungen statt. Bei zylindrischen Batteriezellen kann sich die Mitte des Zylinders stärker ausdehnen als die beiden kreisrunden Enden der Batteriezelle, so dass die Batteriezelle eine Tonnenform annimmt. Quaderförmige Batteriezellen bzw. Pouch-Zellen bzw. prismatische Zellen neigen dazu sich kissenförmig auszudehnen, insbesondere so, dass in der Mitte der rechteckigen Flächen Auswölbungen entstehen. Diese inhomogenen Ausdehnungen führen dazu, dass die Kompressionspads die Ausdehnungen in den Bereichen mit stärkerer Ausdehnung der Batteriezellen nicht mehr ausreichend ausgleichen können und es dort zu ungewollt hohen Druckspannungen kommt, während in den Bereichen der Batteriezellen mit geringerer Ausdehnung nur geringe Druckspannungen auftreten. Werden die Druckspannungen zu groß, kann das Gehäuse platzen oder die Batteriezellen beschädigt werden.

Weiterer Stand der Technik kann den Dokumenten US 2021/249662 A1, US 2013/252063 A1, und CN 219 144 372 U entnommen werden.

Der vorliegenden Erfindung liegt daher die Aufgabe zugrunde, ein verbessertes Kompressionspad zur Verfügung zu stellen, welches die aufgrund der Ausdehnung der Batteriezellen auftretenden Druckspannungen im Vergleich zum Stand der Technik verringert, wobei die Batteriezellen dennoch sicher im Gehäuse positioniert sind.

Die Aufgabe wird durch die Gegenstände und das Verfahren der unabhängigen Patentansprüche gelöst. Bevorzugte Ausgestaltungen der vorliegenden Erfindung ergeben sich aus den in den Unteransprüchen genannten Merkmalen und weiterhin aus der vorliegenden Offenbarung als Ganzes.

Ein erster Aspekt der Erfindung betrifft ein Kompressionspad zur beabstandeten Anordnung von Batteriezellen in einem Batteriepack. Das Kompressionspad umfasst dazu eine flächige Kompressionsschicht mit einer Länge, einer Breite und einer Dicke, wobei die Länge und die Breite ein Vielfaches der Dicke betragen, wobei die Kompressionsschicht eine erste Seitenfläche und eine zweite Seitenfläche aufweist, die jeweils von der Länge und der Breite aufgespannt werden. Das Kompressionspad umfasst bevorzugt zwei flächige Schutzschichten, wovon eine Schutzschicht bevorzugt auf der ersten Seitenfläche und eine Schutzschicht bevorzugt auf der zweiten Seitenfläche der Kompressionsschicht angeordnet ist. Die Kompressionsschicht weist mehrere sich auf der ersten Seitenfläche erstreckende makroskopische Bereiche mit unterschiedlich großen Drucksteifigkeiten auf, wobei bevorzugt die Drucksteifigkeiten in orthogonaler Richtung zur ersten Seitenfläche gemessen werden und insbesondere über den jeweiligen Bereich gemittelt betrachtet werden. Die Kompressionsschicht weist zur Bewirkung der Bereiche mit unterschiedlich großen Drucksteifigkeiten Aussparungen auf, die sich von der ersten Seitenfläche zu der zweiten Seitenfläche erstrecken, wobei sich ein Mittelbereich entlang zumindest eines Teils einer Mittellinie zwischen zwei Längsseiten der ersten und/oder zweiten Seitenfläche auf der ersten und/oder zweiten Seitenfläche erstreckt, und wobei sich Randbereiche jeweils entlang zumindest eines Teils einer Längsseite erstrecken. Die Erfindung zeichnet sich dadurch aus, dass die Aussparungen derart angeordnet sind, dass die Anzahl der Aussparungen und/oder die aufsummierte Querschnittsfläche der Aussparungen von der Mittellinie in Richtung der Längsseiten abnimmt.

In den Bereichen mit größerer Drucksteifigkeit herrscht zu Beginn, also bei Montage der Batteriezellen im Gehäuse, zunächst bevorzugt eine größere Druckspannung, durch welche die Batteriezellen sicher in Position gehalten werden können. Die Bereiche mit höherer Drucksteifigkeit sind bevorzugt so angeordnet, dass in ihnen keine oder nur geringe Ausdehnungen der Batteriezellen zu erwarten ist, so dass die zu Beginn eingestellten Druckspannungen bevorzugt im Wesentlichen konstant bleiben. Die Bereiche mit geringerer Drucksteifigkeit reagieren auf eine Kompression aufgrund der Ausdehnung der Batteriezellen mit einem geringeren Anstieg der Druckspannung, so dass die maximalen Druckspannungen aufgrund der Ausdehnung in diesen Bereichen abgesenkt werden können. Zudem ist eine Voraussetzung dafür geschaffen, den von dem Kompressionspad auf eine sich ausdehnende Batteriezelle ausgeübten Gegendruck zu vergleichmäßigen.

Vorzugsweise ist die Kompressionsschicht derart eingerichtet, dass die Kompressionsschicht zu Beginn der Lebensdauer des Batteriepacks, also bei der Montage der Batteriezellen im Gehäuse, auf etwa 70% ihrer Dicke im unbelasteten Zustand komprimiert wird, um die Vorspannung für die Batteriezellen zu erreichen. Gegen Ende der Lebensdauer des Batteriepacks kann die Kompressionsschicht aufgrund der Ausdehnung der Batteriezellen dann auf etwa 30% ihrer unbelasteten Dicke komprimiert sein. Insbesondere verläuft eine Kompressionskurve der Kompressionsschicht zwischen einer Kompression von 70% und 30% linear. Die Kompression in Prozent bezieht sich hier auf eine Dicke der Kompressionsschicht im montierten also belasteten Zustand bezogen auf eine Dicke der Kompressionsschicht in einem unbelasteten Zustand. Die Kompressionskurve bezieht diese Prozentuale-Kompression auf die Druckspannung, die auf der Kompressionsschicht lastet.

Sowohl das Kompressionspad als auch die Kompressionsschicht sowie die Schutzschichten sind flächig ausgebildet. Flächig bedeutet im Sinne der Anmeldung, dass die Pads bzw. Schichten eine rechteckige Form aufweisen, deren Länge und Breite um ein Vielfaches höher ist als die Dicke. Typischerweise beträgt die Breite 20 bis 150 mm, und die Länge 50 bis 500 mm. Die Dicke des gesamten Kompressionspads kann 0,1 bis 5 mm betragen. Insbesondere beträgt die Breite 80 bis 120 mm, die Länge 200 bis 300 mm, und die Dicke 1 bis 3 mm. Besonders bevorzugt hat sich eine Dicke von 1,6 mm für das gesamte Kompressionspad herausgestellt. Die Länge und die Breite können dabei an bestehende Batteriezellen angepasst sein. Beispielsweise kann eine Breite des Kompressionspads der Höhe einer zylindrischen Batteriezelle entsprechen, oder der Breite oder der Länge einer quaderförmigen Batteriezelle bzw. einem Vielfachen hiervon. Mit Hinblick auf bestehende Batteriezellen hat sich daher besonders bevorzugt eine Länge von 517 mm oder 550 mm und eine Breite von 101 mm herausgestellt.

Die Dicke der Kompressionsschicht allein kann 0,5 bis 2,5 mm betragen, insbesondere 1,2 mm. Die Dicke der Schutzschicht allein kann 0,01 bis 0,5 mm betragen, insbesondere 0,1 bis 0,3 mm. In der Praxis hat sich eine Dicke von 0,2 mm als besonders bevorzugt herausgestellt. Die Länge und die Breite der Schutzschicht ist an die Länge und die Breite der Kompressionsschicht angepasst und entspricht dieser insbesondere.

Zwischen Kompressionsschicht und Schutzschicht kann eine zusätzliche Kleberschicht angeordnet sein. Ebenso können zusätzliche Kleberschichten auf der von der Kompressionsschicht abgewandten Seite der Schutzschicht angeordnet sein, beispielsweise zur Befestigung weiterer Funktionsschichten oder zur Befestigung an den Batteriezellen. Als Kleberschicht kann beispielsweise ein dispersionsbasiertes Polyacrylat (Polyacrylsäureester) eingesetzt werden.

Die Kompressionsschicht weist Bereiche mit unterschiedlichen Drucksteifigkeiten auf. Diese Bereiche haben makroskopische Ausmaße. Mit makroskopisch ist in der Anmeldung gemeint, dass die Bereiche mehrere Millimeter groß sind und bis zu mehreren Zentimetern oder mehreren Dezimetern groß sein können. Nicht gemeint sind damit mikroskopische Bereiche von wenigen Millimetern oder Zehntelmillimetern Ausmaß und darunter. Damit sollen Schwankungen in der Drucksteifigkeit, die sich aufgrund von einzelnen Poren oder Faserlücken im Material der Kompressionspads ergeben, nicht berücksichtigt werden, da diese nicht die Drucksteifigkeit des Materials an sich wiedergeben.

Ein wichtiger Aspekt der Erfindung spiegelt sich darin wider, dass die Drucksteifigkeit der Kompressionsschicht dort geringer eingestellt ist, wo sich die Batteriezellen aufgrund von Alterungsprozessen oder dergleichen über ihre Lebensdauer am stärksten ausdehnen. Quaderförmige oder prismatische Zellen wölben sich an ihren Flächen kissenförmig aus, so dass die Ausdehnung der Batteriezelle in der Mitte der Flächen des Quaders oder des Prismas am größten ist und zu den Kanten hin abnimmt. Bei zylindrischen Batteriezellen ist die Ausdehnung auf halber Höhe des Zylinders am größten und nimmt zu den kreisrunden Endflächen ab. Daher soll die Drucksteifigkeit der Kompressionsschicht in dem Kontaktbereich auf halber Höhe des Zylinders geringer eingestellt sein als in Richtung der Enden des Zylinders. Gleiches gilt entsprechend für quaderförmige oder prismatische Batteriezellen.

In der Regel entspricht der Bereich der Kompressionsschicht, der eine geringere Drucksteifigkeit aufweist, dem Bereich um eine Mittelline herum, welche sich zwischen den beiden Längsseiten der Kompressionsschicht ergibt. Dieser Bereich wird als Mittelbereich bezeichnet. Insbesondere für den Einsatz des Kompressionspads bei quaderförmigen oder prismatischen Batteriezellen kann sich der Mittelbereich entlang einer Mittellinie erstrecken, die zwischen den beiden Kanten angeordnet ist, welche sich in der Breite des Kompressionspads erstrecken. Auf diese Weise entsteht ein Mittelbereich in der Mitte der ersten und/oder zweiten Seitenfläche der Kompressionsschicht.

Die Bereiche mit höherer Drucksteifigkeit erstrecken sich entlang der Längsseiten der Kompressionsschicht und erstrecken sich von dort aus in Richtung der Mittellinie. Diese Bereiche werden als Randbereiche bezeichnet. Darüber hinaus können weitere Bereiche vorgesehen sein, die zwischen den Bereichen mit höchster und niedrigster Drucksteifigkeit liegen, und deren Drucksteifigkeit zwischen der höchsten und der niedrigsten Drucksteifigkeit liegen. Diese Bereiche werden als Zwischenbereiche bezeichnet. Bevorzugt grenzt der Mittelbereich an die Zwischenbereiche an, und die Zwischenbereiche an die Randbereiche, wobei sich weder Mittelbereich und Zwischenbereiche noch Randbereiche und Zwischenbereiche überlappen.

Die Drucksteifigkeiten können durch Materialparameter der Kompressionsschicht beeinflusst werden. So bietet es sich beispielsweise bei einem porösen Material an die Porengröße oder die Dichte der Poren über die Breite der Kompressionsschicht zu variieren. Eine größere Dichte an Poren, also eine Höhere Anzahl an Poren bezogen auf ein bestimmtes Volumen, führt zu einer geringeren Drucksteifigkeit, ebenso wie eine Vergrößerung der Poren. Bei einem Fasermaterial können die Dichte der Fasern und die Abstände der Fasern analog dazu eingestellt werden.

Erfindungsgemäß ist das Einbringen von Aussparungen, beispielsweise durch Ausstanzen oder Auslasern von Aussparungen in die Kompressionsschicht, so dass durchgehende Löcher in der flächigen Kompressionsschicht entstehen. Hierdurch kann die Fertigung, verglichen mit der Beeinflussung der Drucksteifigkeit durch Materialparameter, vereinfacht sein. Durch ein oder zwei vorhandene Schutzschichten kann eine sprunghafte Änderung der Drucksteifigkeit des Kompressionspads als Ganzes im Bereich der Aussparungen der Kompressionsschicht vermieden werden.

Zudem kann je nach Herstellungsverfahren der Kompressionsschicht oder je nach Anwendungsfall eine Mindestdicke der Kompressionsschicht gefordert sein, welche eigentlich größer als gewünscht ist. Insbesondere diese Bereiche können durch das Einbringen von Aussparungen in ihrer Drucksteifigkeit beeinflusst und optimiert werden. So ergibt sich beispielsweise aus einer eigentlich zu großen Dicke der Kompressionsschicht, welche auf eine geforderte geringere Dicke komprimiert werden muss, eine geringe Nachgiebigkeit und hohe Drucksteifigkeit der Kompressionsschicht, so dass die Nachgiebigkeit durch das Einbringen von Aussparungen wieder erhöht bzw. die Drucksteifigkeit verringert werden kann.

Daher weist das Kompressionspad in einer Ausführungsform eine Kompressionsschicht auf, die Aussparungen aufweist, die sich in orthogonaler Richtung von der ersten Seitenfläche zu der zweiten Seitenfläche erstrecken.

Bevorzugt ist nur die Kompressionsschicht mit Aussparungen versehen, so dass etwaige Schutzschichten ihre zusammenhängende Oberfläche behalten, und beispielsweise eine flammhemmende Wirkung der Schutzschichten erhalten bleibt.

Erfindungsgemäß sind die Aussparungen derart angeordnet, dass in einem Mittelbereich der Kompressionsschicht die Anzahl der Aussparungen und/oder die aufsummierte Querschnittsfläche der Aussparungen größer ist als in den Randbereichen. Der Mittelbereich erstreckt sich dabei entlang einer Mittellinie zwischen zwei Längsseiten der Kompressionsschicht und erstreckt sich insbesondere zusätzlich in Richtung der Längsseiten. Die Randbereiche grenzen an den Längsseiten an, und erstrecken sich entlang der Längsseiten, wobei die Randbereiche sich insbesondere ausgehend von den Längsseiten in Richtung der Mittellinie erstrecken. Dabei können der Mittelbereich und der Randbereich aneinander angrenzen, oder an andere Bereiche wie zum Beispiel den Zwischenbereich angrenzen. Die einzelnen Bereiche überlappen sich jedoch nicht.

Die Erstreckung des Mittelbereichs kann ausgehend von der Mittellinie symmetrisch in beide Richtungen hin zu den Längsseiten der Kompressionsschicht ausgebildet sein, so dass dann auch die Aussparungen symmetrisch zu der Mittellinie angeordnet sind.

Die Drucksteifigkeit kann durch die Anzahl der Aussparungen beeinflusst werden. Je mehr Aussparungen bezogen auf eine bestimmte Fläche in die Kompressionsschicht eingebracht sind, desto niedriger ist die Drucksteifigkeit in diesem Bereich, da die Drucksteifigkeit über den gesamten Bereich gemittelt betrachtet wird. Bevorzugt tragen, bezogen auf das Kompressionspad als Ganzes, die Schutzschichten zur Mittelung der Drucksteifigkeit bei. Dabei kommt es auf die aufsummierte Querschnittsfläche der Aussparungen bezogen auf eine bestimmte Fläche an. Je größer die aufsummierte Querschnittsfläche der Aussparungen, also die Negativfläche, bezogen auf eine bestimmte Fläche ist, desto niedriger ist die Drucksteifigkeit. Demnach kann also neben der Anzahl der Aussparungen auch die Größe der Querschnittsfläche der Aussparungen variiert werden, um die Drucksteifigkeit der Kompressionsschicht in den einzelnen Bereichen einzustellen.

In einer Ausführungsform sind bei zylinderförmigen Batteriezellen die Batteriezellen mit ihrer Längsachse parallel zur Breite des Kompressionspads bzw. der Kompressionsschicht angeordnet, so dass die Bereiche mit geringerer Drucksteifigkeit in der Mitte der Batteriezelle angeordnet sind. Die Mitte der Batteriezelle befindet sich auf halber Höhe der Längsachse der zylindrischen Batteriezelle, oder bei einer quaderförmigen Batteriezelle auf halber Höhe der Längsachse, wobei die Länge größer als die Breite und Dicke der Batteriezelle ist, oder bei einer prismatischen Batteriezelle auf halber Höhe des Prismas. Die Ausdehnungen aufgrund von Alterung der Batteriezelle sind in diesen Bereichen am größten und nehmen zu den Randbereichen hin ab.

Erfindungsgemäß sind die Aussparungen derart angeordnet, dass die Anzahl der Aussparungen und/oder die aufsummierte Querschnittsfläche der Aussparungen von der Mittellinie in Richtung der Längsseiten abnimmt. Idealerweise nimmt so die Drucksteifigkeit zu den Längsseiten hin zu, also zu den Randbereichen hin, so dass die Drucksteifigkeit an den Verlauf der Ausdehnungen der Batteriezelle in den verschiedenen Bereichen angepasst ist. Es ist ebenfalls denkbar, dass die Aussparungen analog zu einer Mittellinie zwischen zwei sich in der Breite erstreckenden Kanten verteilt sind. Die beiden Mittellinien sind dann orthogonal zueinander angeordnet. Bereiche der Batteriezelle mit großer Ausdehnung kommen bevorzugt mit Bereichen des Kompressionspads bzw. der Kompressionsschicht mit geringer Drucksteifigkeit in Kontakt, und Bereiche der Batteriezelle mit geringerer Ausdehnung kommen bevorzugt mit Bereichen des Kompressionspads bzw. der Kompressionsschicht mit höherer Drucksteifigkeit in Kontakt. Dies bezieht sich selbstverständlich auf den zusammengebauten Zustand der Batteriezellen mit den Kompressionspads in einem Batteriepack.

Der Anzahl der Aussparungen oder der aufsummierten Querschnittsfläche der Aussparungen kann daher auch ein Verteilungsprofil zugrunde gelegt werden, durch welches bestimmt wird, wie groß die Dichte der Aussparungen bezogen auf eine Fläche in Abhängigkeit des Abstands zur Mittellinie sein soll, bzw. wie groß die aufsummierte Querschnittsfläche bezogen auf eine Fläche in Abhängigkeit vom Abstand zur Mittellinie sein soll. In diesem Fall ist die Anzahl der Aussparungen oder die aufsummierte Querschnittsfläche über die einzelnen Bereiche nicht konstant, sondern nimmt mit zunehmendem Abstand zur Mittelline ab.

In einer weiteren Ausführungsform des Kompressionspads weisen die Aussparungen eine längliche Form auf, und erstrecken sich parallel zu den Längsseiten der Kompressionsschicht. Neben einer kreisrunden oder elliptischen Form können sich auch längliche Formen als günstig erweisen. Eine solche längliche Form kann beispielsweise ein Langloch oder ein Rechteck mit einer Breite sein, dessen Länge ein Vielfaches der Breite des Rechtecks beträgt.

In einer weiteren Ausführungsform des Kompressionspads sind die länglichen Aussparungen derart ausgestaltet und angeordnet, dass die Kompressionsschicht in mehrere, nicht miteinander verbundene Streifen unterteilt ist. Die einzelnen Streifen der Kompressionsschicht im Kompressionspad können bevorzugt durch eine oder zwei Schutzschichten relativ zueinander in Position gehalten werden.

Die länglichen Aussparungen entsprechen in dieser Ausführungsform rechteckigen Aussparungen, deren Länge der Länge des Kompressionspads entspricht. Dass die Streifen nicht miteinander verbunden sind, heißt in diesem Zusammenhang, dass die einzelnen Streifen nicht direkt untereinander verbunden sind und sich daher auch nicht untereinander berühren. Die Streifen können jedoch über andere Elemente wie beispielsweise die Schutzschichten verbunden sein.

Vorzugsweise ist die Kompressionsschicht bzw. das Kompressionspad derart eingerichtet, dass sie bzw. es eine thermische Isolation zwischen den Batteriezellen bewirkt.

In einer weiteren Ausführungsform des Kompressionspads ist die Kompressionsschicht aus PE-Schaum (Polyethylen-Schaum) hergestellt. Polyethylen ist ein kostengünstiger Kunststoff, der bedingt hitzebeständig ist, je nach Ausführungsform beispielsweise bis 100 °C, und sich daher für den Einsatz in Batteriepacks eignet. Batteriepacks erreichen im Betrieb nur selten über 100 °C, da bei höheren Temperaturen die Lebensdauer der Batteriepacks zu stark eingeschränkt wird. Das PE liegt als Schaum vor, wobei die Drucksteifigkeit einer solchen PE-Schaum-Schicht in einem nutzbaren Bereich für die Batteriepackherstellung liegt. Durch ein oder zwei auf die Kompressionsschicht aufgebrachte Schutzschichten kann das PE vor der Hitze der Batterien begrenzt geschützt werden. Die Anzahl und die Größe der Poren des PE-Schaums können bei der Herstellung der Kompressionsschicht individuell angepasst werden, so dass die Drucksteifigkeit beeinflusst werden kann.

Insbesondere eignet sich vernetztes PE als Werkstoff für die Kompressionsschicht, so dass in einer Ausführungsform die Kompressionsschicht aus vernetztem PE-Schaum hergestellt ist. Hiermit wird im Rahmen dieser Druckschrift insbesondere chemisch oder physikalisch vernetzter PE-Schaum bezeichnet, bei dem die Polymerketten an bestimmten Punkten chemisch oder physikalisch untereinander verbunden sind und ein dreidimensionales Netzwerk bilden. Vernetztes PE wird auch als PEX bezeichnet. Die mechanischen und thermischen Eigenschaften sind bei vernetztem PE in der Regel besser als die von normalem PE. Im Vergleich zu thermoplastischem, also dem erwähnten normalen PE, schmilzt vernetztes PE nicht und ist thermisch beständiger.

Die Kompressionsschicht kann auch z. B. aus PUR-Schaum (Polyurethan-Schaum), PO-Schaum (Polyolefin-Schaum) oder einem Melaminharz-Schaum hergestellt sein. Die Kompressionsschicht kann bevorzugt aus einem oder mehreren der genannten Schäume bestehen.

Bevorzugt bietet sich eine Kompressionsschicht hergestellt aus oder bestehend aus vernetztem PO-Schaum an (analog zum zuvor beschriebenen vernetzten PE-Schaum).

Verdichteter PUR-Schaumstoff kann ebenfalls als Material für die Kompressionsschicht dienen. Bei verdichtetem PUR-Schaumstoff kann es sich um insgesamt verdichteten PUR-Schaumstoff handeln, welcher mechanisch verdichtet wurde, oder aber um einen PUR-Schaumstoff, dessen Oberfläche verdichtet wurde. Die Verdichtung der Oberfläche kann entweder mechanisch oder thermisch erfolgen. Sofern die Kompressionsschicht aus PUR-Schaumstoff besteht, kann wenigstens eine der Oberflächen der Kompressionsschicht verdichtet ausgeführt sein, beispielsweise wenigstens die Oberflächen der Kompressionsschicht, die direkten oder indirekten Kontakt zu den Batteriezellen aufweisen. Durch die Verdichtung des PUR-Schaums werden die mechanischen Eigenschaften des Materials positiv beeinflusst. Auch auf die Porenstruktur des Schaums kann durch die Verdichtung Einfluss genommen werden. Daher ist die Kompressionsschicht vorzugsweise aus einem verdichteten PUR-Schaum hergestellt, oder besteht vollständig daraus.

Auch eine Kompressionsschicht hergestellt aus oder bestehend aus Hochtemperatur-Schaum, wie beispielsweise Melaminharz-Schaum, kann von Vorteil sein.

Die Drucksteifigkeit einer geeigneten Kompressionsschicht, insbesondere aus PE-Schaum, PUR-Schaum, PO-Schaum oder Melaminharz-Schaum, sowie deren vernetzte oder verdichtete Form, kann bei einer Kompression von 50 % im Bereich von 150 bis 200 kPa, insbesondere 160 bis 180 kPa, liegen.

In einer weiteren Ausführungsform umfasst die Kompressionsschicht ein nicht-geschäumtes Material oder besteht aus diesem. Das nicht-geschäumte Material kann beispielsweise ein Elastomer-Gummi sein. Elastomer-Gummi ist aus Naturkautschuk und/oder Synthesekautschuk hergestellt.

Es ist ebenso denkbar, dass die Kompressionsschicht aus einem Silikon-Schaum hergestellt ist oder daraus besteht.

Das Kompressionspad umfasst bevorzugt ein oder zwei flächige Schutzschichten. Sofern eine Schutzschicht vorhanden ist, ist diese auf der ersten oder der zweiten Seitenfläche der Kompressionsschicht angeordnet. Wenn zwei Schutzschichten vorgesehen sind, ist eine Schutzschicht auf der ersten Seitenfläche angeordnet und die andere Schutzschicht auf der zweiten Seitenfläche der Kompressionsschicht angeordnet.

In einer weiteren Ausführungsform des Kompressionspads sind die eine oder die zwei Schutzschichten flammhemmende Schutzschichten. Als flammhemmend werden Stoffe bezeichnet, die zwar möglicherweise unter Hitzezufuhr brennen, jedoch nicht selbstständig weiter brennen, wenn die Hitzezufuhr unterbrochen wird.

Als flammhemmende Schutzschicht bietet sich beispielsweise eine Schutzschicht an, die aus Mica hergestellt ist oder zumindest Mica zu einem wesentlichen Teil enthält.

Mica wird auch als Glimmer oder Glimmergruppe bezeichnet und umfasst eine Gruppe von Mineralien aus Schichtsilikaten. Die Schutzschicht kann dabei zu einem wesentlichen Teil aus Mica bestehen, wobei die Schutzschicht zur mechanischen Stabilisierung des Micas eine Matrix oder einen Matrix-Werkstoff umfassen kann.

Das Mica kann auf einer Matte, insbesondere einer Gittergewebematte, angeordnet sein. Auch eine Beschichtung des Mica und/oder der Kompressionsschicht mit Vlies ist denkbar.

Durch die Schutzschicht kann sowohl die Kompressionsschicht vor Hitze bzw. Flammen geschützt werden als auch die Batteriezellen untereinander. Beispielsweise kann eine defekte Batteriezelle beginnen zu brennen, und die von dieser Batteriezelle ausgehenden Flammen können durch die Schutzschichten daran gehindert werden, auf andere Batteriezellen überzuschlagen.

Bevorzugt sind die eine oder die zwei Schutzschichten aus einem Material auf mineralischer Basis hergestellt. Materialien auf mineralischer Basis weisen eine anorganische Basis auf und stehen im Gegensatz zu Materialien auf organischer Basis. Materialien auf mineralischer Basis weisen eine mineralische, nichtmetallene Komponente wie zum Beispiel Kalk, Zement, Gips oder Silikat auf. Als eine solche Komponente kommen auch natürliche Mineralen wie zum Beispiel Sand, Naturstein oder Lehm in Frage, sowie sämtliche Kombinationen der in diesem Absatz genannten Stoffe. Beispielsweise ist eine Schutzschicht aus Mica auf mineralischer Basis hergestellt. Die Schutzschichten können auch ausschließlich aus einer der in diesem Absatz genannten Komponenten oder einer Kombination aus diesen Komponenten bestehen.

Ein zweiter Aspekt der Erfindung betrifft ein Verfahren zur Herstellung eines Kompressionspads mit den folgenden Schritten:
a. Bereitstellen einer Kompressionsschicht, mit einer Länge, einer Breite und einer Dicke, wobei die Länge und die Breite ein Vielfaches der Dicke betragen, wobei die Kompressionsschicht eine erste Seitenfläche und eine zweite Seitenfläche aufweist, die jeweils von der Länge und der Breite aufgespannt werden;
b. Einbringen von Aussparungen in die Kompressionsschicht zur Beeinflussung der Drucksteifigkeit der Kompressionsschicht in wenigstens einem vordefinierten makroskopischen Bereich der ersten und/oder der zweiten Seitenfläche, wobei sich die Aussparungen von der ersten Seitenfläche zu der zweiten Seitenfläche erstrecken, wobei sich ein Mittelbereich entlang zumindest eines Teils einer Mittellinie zwischen zwei Längsseiten der ersten und/oder zweiten Seitenfläche auf der ersten und/oder zweiten Seitenfläche erstreckt, und wobei sich Randbereiche jeweils entlang zumindest eines Teils einer Längsseite erstrecken, wobei die Aussparungen derart angeordnet sind, dass die Anzahl der Aussparungen und/oder die aufsummierte Querschnittsfläche der Aussparungen von der Mittellinie in Richtung der Längsseiten abnimmt.

In einer Ausführungsform des Verfahrens kann das Verfahren zusätzlich die folgenden Schritte umfassen:
c. Aufbringen einer Kleberschicht jeweils auf die erste Seitenfläche und die zweite Seitenfläche der Kompressionsschicht;
d. Aufbringen jeweils einer Schutzschicht auf die beiden Kleberschichten aus Schritt c.

Die Kompressionsschicht wird bei dem Verfahren zunächst mit Aussparungen versehen, um die gewünschte Drucksteifigkeitsverteilung auf der Oberfläche der Kompressionsschicht zu erhalten. Nach dem Einbringen der Aussparungen wird bevorzugt jeweils eine Kleberschicht auf der ersten Seitenfläche und der zweiten Seitenfläche der Kompressionsschicht aufgetragen. Mithilfe dieser Kleberschichten werden bevorzugt die beiden Schutzschichten auf der Kompressionsschicht befestigt.

In einer Ausführungsform des Verfahrens kann das Verfahren zusätzlich die folgenden Schritte umfassen:
e. Aufbringen jeweils einer Kleberschicht auf den beiden Schutzschichten;
f. Aufbringen jeweils einer Klebefolie auf den beiden Kleberschichten aus Schritt e.

Alternativ und analog zur Aufbringung zweier Schutzschichten kann das Verfahren auch nur die Aufbringung einer Schutzschicht auf die erste oder die zweite Seitenfläche der Kompressionsschicht umfassen. Die Schritte e und f können wahlweise nur auf der auf die Kompressionsschicht aufgebrachten Schutzschicht durchgeführt werden, oder sowohl auf der auf der Kompressionsschicht aufgebrachten Schutzschicht als auch auf der Seitenfläche der Kompressionsschicht, auf welche keine Schutzschicht aufgebracht wird.

Auf die Schutzschichten können, insbesondere auf der der Kompressionsschicht abgewandten Seite, zusätzlich weitere Kleberschichten aufgetragen werden, welche zur Befestigung einer oder mehrerer Klebefolien auf den Schutzschichten dient. Die Klebefolie kann beispielsweise zur Befestigung des gesamten Kompressionspads an den Batteriezellen dienen, und dazu selbstklebend ausgeführt sein.

Das Bereitstellen der Schichten und Folien kann auf Rollen erfolgen, von denen die Schichten und Folien durch Abrollen dem Herstellungsprozess zugeführt werden. Dabei wird zunächst die Kompressionsschicht abgerollt, wobei wiederum auf die abgerollte Kompressionsschicht die Kleberschichten abgerollt werden. Auf die Kleberschichten werden dann die Schutzschichten abgerollt. Die Schichten können mithilfe von Walzen aufeinandergepresst werden. Wird eine thermisch aktivierbare Kleberschicht wie zum Beispiel eine thermoplastische Kleberschicht verwendet, können die Schichten zusätzlich zum Verpressen durch die Walzen auch mittels Hitzeeinwirkung miteinander verbunden werden können. Die Kleberschichten können auf einer Trägerfolie bereitgestellt werden, welche nach dem Aufbringen der Kleberschichten wieder entfernt wird.

Ein dritter Aspekt der Erfindung betrifft ein Batteriepack mit wenigstens einem Kompressionspad nach einem der Ansprüche 1 bis 10, wobei das Batteriepack einzelne miteinander elektrisch verbundene Batteriezellen umfasst, die mittels der Kompressionspads beabstandet zueinander angeordnet sind.

In dem Batteriepack sind die Batteriezellen relativ zu dem Kompressionspad insbesondere so angeordnet, dass die Bereiche des Kompressionspads bzw. der Kompressionsschicht mit geringerer Drucksteifigkeit, wie zum Beispiel der Mittelbereich, mit den Bereichen der Batteriezellen zusammenfallen, welche sich im Laufe der Nutzung am stärksten Ausdehnen, so dass die Ausdehnung der Batteriezellen möglichst gut durch das Kompressionspad ausgeglichen werden können.

Die Batteriezellen des Batteriepacks können jeweils ein eigenes, starres Gehäuse aufweisen. Auch in dieser Ausführungsform kann es vorteilhaft sein, die Batteriezellen mittels der Kompressionspads beabstandet zueinander anzuordnen. Hierzu können die Kompressionspads in den Gehäusen der Batteriezellen und/oder zwischen diesen Gehäusen angeordnet sein.

Bevorzugt weisen die Batteriezellen des Batteriepacks kein eigenes, starres Gehäuse auf. Das Batteriepack umfasst insbesondere ein einziges, nämlich ein äußeres, starres Gehäuse.

Das Batteriepack umfasst bevorzugt quaderförmige Batteriezellen. Das Batteriepack umfasst bevorzugt Pouch-Zellen und/oder prismatische Zellen. Das Batteriepack kann zylindrische Zellen umfassen

Im Folgenden wird die Erfindung anhand von Ausführungsbeispielen und schematischen Zeichnungen exemplarisch erläutert. Hierbei zeigen:
- Figur 1: ein Ausschnitt eines Kompressionspads zur Verdeutlichung des Schichtaufbaus,
- Figur 2: eine Kompressionsschicht mit drei Bereichen mit jeweils verschiedenen Drucksteifigkeiten,
- Figur 3: eine Kompressionsschicht zusammengesetzt aus mehreren Streifen,
- Figur 4: ein Kompressionspad in einem Batteriepack aus neun Batteriezellen,
- Figur 5: ein Kompressionspad in einer Schnittdarstellung zwischen zwei zylindrischen Batteriezellen, welche inhomogen ausgedehnt sind,
- Figur 6: ein Kompressionspad in einer Schnittdarstellung zwischen zwei quaderförmigen Batteriezellen, welche inhomogen ausgedehnt sind,
- Figur 7: das Kompressionspad aus Fig. 2 exemplarisch zwischen zwei zylindrischen Batteriezellen,
- Figur 8: eine Kompressionsschicht mit drei Bereichen mit jeweils verschiedenen Drucksteifigkeiten für quaderförmige Batteriezellen.

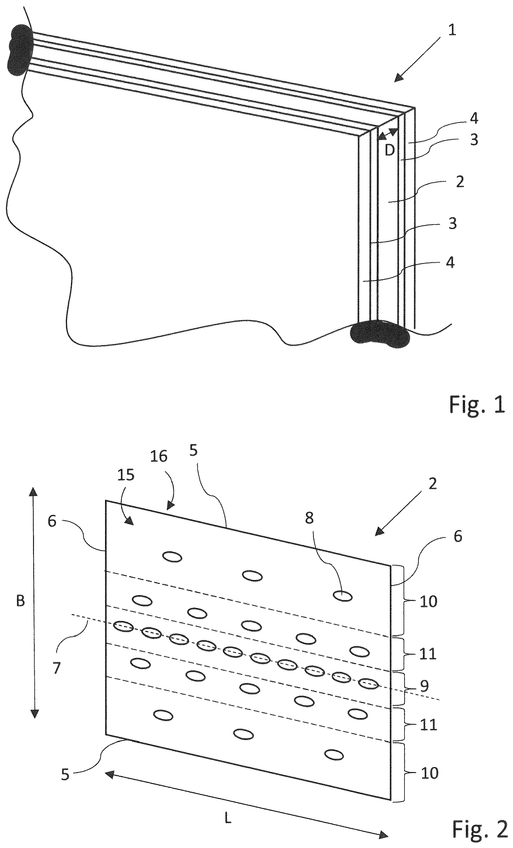

Figur 1 zeigt einen Ausschnitt eines Kompressionspads 1 zur Verdeutlichung des Schichtaufbaus. In der Mitte befindet sich eine Kompressionsschicht 2 auf deren erste Seitenfläche 15 und zweite Seitenfläche 16 jeweils eine Kleberschicht 3 angeordnet ist. Auf den beiden Kleberschichten 3 ist jeweils eine Schutzschicht 4 aufgebracht. Die Dicken der einzelnen Schichten sind im Verhältnis nicht realitätsnah wiedergebeben, sondern sollen nur schematisch den Schichtaufbau wiedergeben. Beispielsweise würde eine Kleberschicht 3 in Realität sehr viel dünner ausfallen.

Figur 2 zeigt die Kompressionsschicht 2 mit zwei Längsseiten 5 und zwei Seitenkanten 6. Die Dicke ist hier aus zeichnerischen Gründen nicht dargestellt. Zwischen den beiden Längsseiten 6 ist eine Mittellinie 7 eingezeichnet.

Die Kompressionsschicht 2 ist mit Aussparungen 8 versehen, welche in einem Mittelbereich 9 um die Mittellinie 7 herum eine größere Anzahl aufweisen als in einem Randbereich 10. Zwischen dem Mittelbereich 9 und jeweils den Randbereichen 10 sind zwei Zwischenbereiche 11 angeordnet, die eine Anzahl an Aussparungen 8 zwischen der Anzahl der Aussparungen 8 des Mittelbereichs 9 und des Randbereichs 10 aufweisen. Die Aussparungen sind symmetrisch zur Mittellinie 7 angeordnet, da auch die Ausdehnung der Batteriezellen 13 an der Mittellinie 7 am größten ist und zu den Randbereichen 10 hin symmetrisch abnimmt.

Durch die Aussparungen 8 werden die Drucksteifigkeiten der einzelnen Bereiche 9, 10 und 11 beeinflusst. Aufgrund der hohen Anzahl an Aussparungen 8 im Mittelbereich 9 weist dieser die geringste Drucksteifigkeit auf, während die geringe Anzahl an Aussparungen 8 in den Randbereichen 10 zu der höchsten Drucksteifigkeit führt. Die Drucksteifigkeit der Zwischenbereiche 11 liegt zwischen der Drucksteifigkeit des Mittelbereichs 9 und des Randbereichs 11.

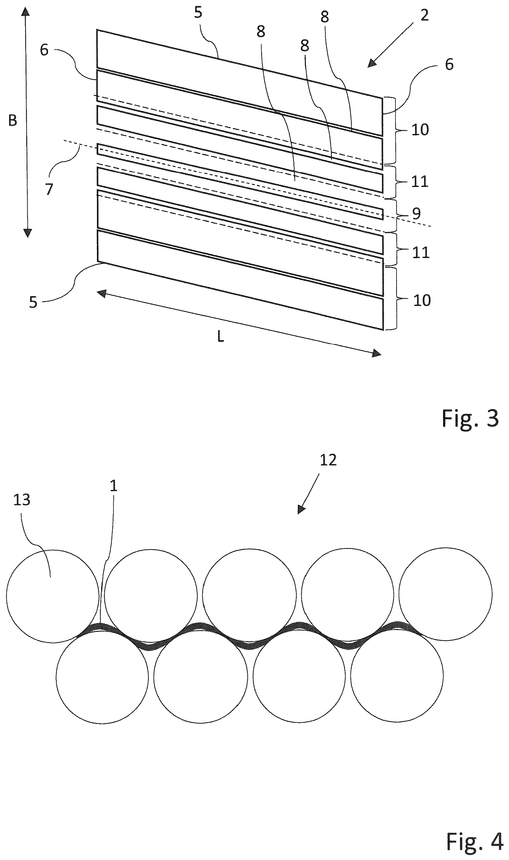

Figur 3 zeigt eine weitere Ausführungsform der Kompressionsschicht 2 mit rechteckigen Aussparungen 8, deren Größe so gewählt ist, dass die Kompressionsschicht 2 in einzelne Streifen unterteilt ist. Die Aussparungen 8 sind im Mittelbereich 9 breiter ausgestaltet als im Randbereich 10 und im Zwischenbereich 11, während die Aussparungen 8 im Randbereich 10 kleiner als im Zwischenbereich 11 ausgestaltet sind. Dies hat dieselben Auswirkungen auf die Drucksteifigkeit der Bereiche 9, 10 und 11 wie in Figur 2 beschrieben.

Figur 4 zeigt ein Kompressionspad 1 in einem Batteriepack 12 aus neun einzelnen zylindrischen Batteriezellen 13, wobei das Batteriepack 12 nicht vollständig dargestellt ist. Gut zu erkennen ist hier, wie das Kompressionspad 1 zwischen den Batteriezellen 13 auf eine geringe Dicke zusammengedrückt wird und in den anderen Bereichen eine größere Dicke aufweist.

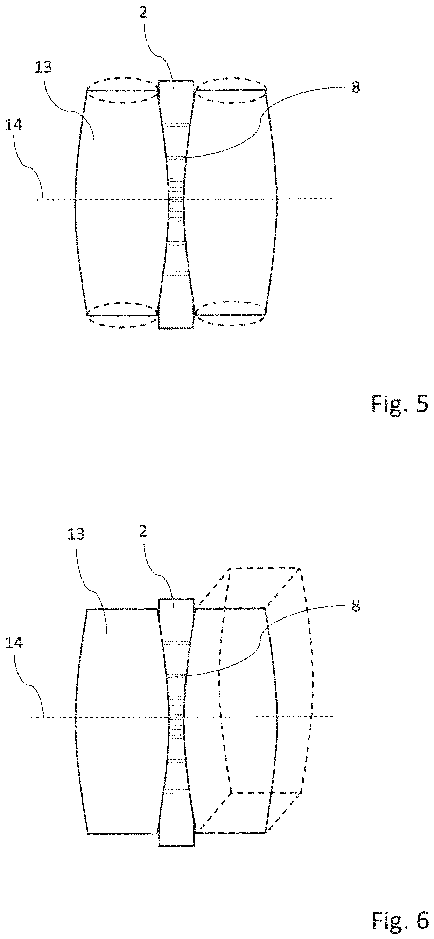

Figur 5 zeigt ein Kompressionspad 1 zwischen zwei ursprünglich zylindrischen Batteriezellen 13 in einem Schnittbild, wobei die Batteriezellen 13 bereits inhomogen ausgedehnt sind. Die Darstellung der Ausdehnung der Batteriezellen 13 ist überzeichnet, gibt jedoch die grundsätzliche Geometrie solcher gealterten Batteriezellen 13 gut wieder. Zu sehen ist, dass die Batteriezellen 13 im mittleren Bereich auf halber Höhe 14 der ursprünglich zylindrischen Form die größte Ausdehnung aufweisen und nun eine Fass- oder Tonnen-ähnliche Form aufweisen. Dort wird die Kompressionsschicht 2 am stärksten komprimiert, so dass dort auch die meisten Aussparungen 8 vorgesehen sind, damit die Drucksteifigkeit der Kompressionsschicht 2 dort am geringsten ist und die Druckspannungen möglichst gering gehalten werden können.

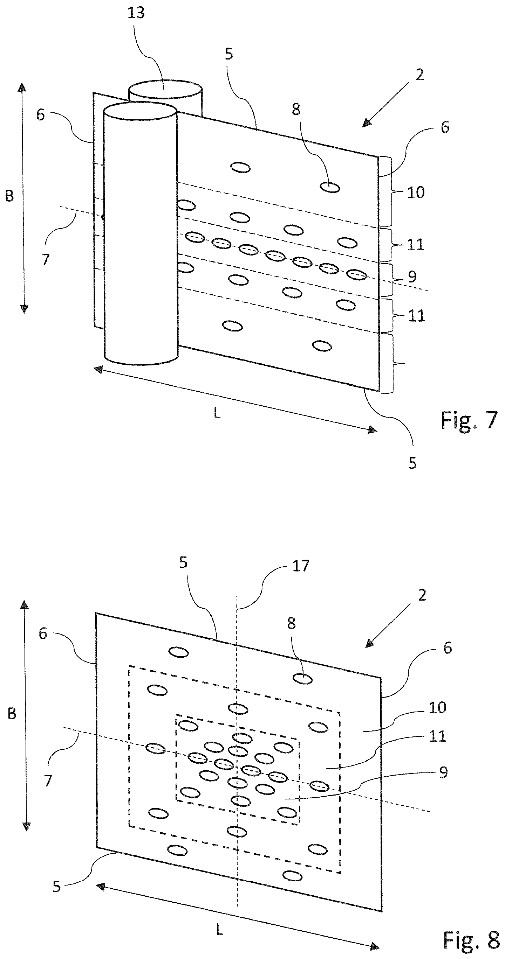

Figur 6 zeigt ebenfalls ein Kompressionspad 1 zwischen zwei Batteriezellen 13 in einem Schnittbild wie Figur 5, nur dass hier die Batteriezellen 13 ursprünglich eine quaderförmige Form hatten, und nun kissenförmig ausgedehnt sind. Das Prinzip der Aussparungen 8 des Kompressionspads 1 ist dasselbe. Auf Höhe der größten Ausdehnung der Batteriezellen 13 sind die meisten Aussparungen 8 vorgesehen. Siehe dazu auch Fig. 8, mit einem Kompressionspad 1 speziell für quaderförmige Batteriezellen 13.

Figur 7 zeigt das Kompressionspad 1 aus Figur 2 exemplarisch zwischen zwei zylindrischen Batteriezellen 13. In dieser Darstellung ist sehr gut zu erkennen, dass die Dichte der Aussparungen 8 im Bereich der halben Höhe der zylindrischen Batteriezellen 13, welche mit der Mittellinie 7 zusammenfällt, am größten ist, und zu den Randbereichen 10 hin abnimmt, da die größten Ausdehnungen der Batteriezellen 13 im Mittelbereich 9 zu erwarten sind, während die geringsten Ausdehnungen im Randbereich 10 zu erwarten sind.

Figur 8 zeigt eine Kompressionsschicht 2 mit zwei Längsseiten 5 und zwei Seitenkanten 6 speziell für quaderförmige Batteriezellen 13. Die Dicke D ist hier aus zeichnerischen Gründen nicht dargestellt. Zwischen den beiden Längsseiten 6 ist eine Mittellinie 7 eingezeichnet, und zwischen den beiden Seitenkanten 6 eine Seitenkanten-Mittellinie 17.

Die Kompressionsschicht 2 ist mit Aussparungen 8 versehen, welche in einem Mittelbereich 9 um die Mittellinie 7 und die Seitenkanten-Mittellinie 17 herum eine größere Anzahl aufweisen als in einem Randbereich 10. Zwischen dem Mittelbereich 9 und dem Randbereich 10 ist ein Zwischenbereich 11 angeordnet, der eine Anzahl an Aussparungen 8 zwischen der Anzahl der Aussparungen 8 des Mittelbereichs 9 und des Randbereichs 10 aufweisen. Die Aussparungen 8 sind symmetrisch zur Mittellinie 7 und Seitenkanten-Mittellinie 17 angeordnet, da auch die Ausdehnung der quaderförmigen Batteriezellen 13 in dem Kreuzungspunkt der beiden Mittellinien 7 und 17 am größten ist und zum Randbereich 10 hin symmetrisch abnimmt.

Durch die Aussparungen 8 werden die Drucksteifigkeiten der einzelnen Bereiche 9, 10 und 11 beeinflusst. Aufgrund der hohen Anzahl an Aussparungen 8 im Mittelbereich 9 weist dieser die geringste Drucksteifigkeit auf, während die geringe Anzahl an Aussparungen 8 in dem Randbereich 10 zu der höchsten Drucksteifigkeit führt. Die Drucksteifigkeit des Zwischenbereichs 11 liegt zwischen der Drucksteifigkeit des Mittelbereichs 9 und des Randbereichs 11.

### Bezugszeichenliste

- 1: Kompressionspad
- 2: Kompressionsschicht
- 3: Kleberschicht
- 4: Schutzschicht
- 5: Längsseite
- 6: Seitenkante
- 7: Mittellinie
- 8: Aussparungen
- 9: Mittelbereich
- 10: Randbereich
- 11: Zwischenbereich
- 12: Batteriepack
- 13: Batteriezellen
- 14: halbe Höhe
- 15: erste Seitenfläche
- 16: zweite Seitenfläche
- 17: Seitenkanten-Mittellinie

- L: Länge
- B: Breite
- D: Dicke

## Patentansprüche

1. Kompressionspad (1) zur beabstandeten Anordnung von Batteriezellen (13) in einem Batteriepack (12), umfassend eine flächige Kompressionsschicht (2) mit einer Länge (L), einer Breite (B) und einer Dicke (D), wobei die Länge (L) und die Breite (B) ein Vielfaches der Dicke (D) betragen, wobei die Kompressionsschicht (2) eine erste Seitenfläche (15) und eine zweite Seitenfläche (16) aufweist, die jeweils von der Länge (L) und der Breite (B) aufgespannt werden, wobei die Kompressionsschicht (2) mehrere sich auf der ersten und/oder zweiten Seitenfläche (15, 16) erstreckende makroskopische Bereiche (9, 10, 11) mit unterschiedlich großen Drucksteifigkeiten aufweist, wobei bevorzugt die Drucksteifigkeiten in orthogonaler Richtung zur ersten und/oder zweiten Seitenfläche (15, 16) gemessen werden, wobei die Kompressionsschicht (2) zur Bewirkung der Bereiche (9, 10, 11) mit unterschiedlich großen Drucksteifigkeiten Aussparungen (8) aufweist, die sich von der ersten Seitenfläche (15) zu der zweiten Seitenfläche (16) erstrecken, wobei sich ein Mittelbereich (9) entlang zumindest eines Teils einer Mittellinie (7) zwischen zwei Längsseiten (5) der ersten und/oder zweiten Seitenfläche (15, 16) auf der ersten und/oder zweiten Seitenfläche (15, 16) erstreckt, und wobei sich Randbereiche (10) jeweils entlang zumindest eines Teils einer Längsseite (5) erstrecken, **dadurch gekennzeichnet, dass**
die Aussparungen (8) derart angeordnet sind, dass die Anzahl der Aussparungen (8) und/oder die aufsummierte Querschnittsfläche der Aussparungen (8) von der Mittellinie (7) in Richtung der Längsseiten (5) abnimmt.

2. Kompressionspad (1) nach dem vorhergehenden Anspruch,
**dadurch gekennzeichnet, dass**
die Aussparungen (8) eine längliche Form aufweisen, und sich parallel zu den Längsseiten (5) der Kompressionsschicht (2) erstrecken.

3. Kompressionspad (1) nach einem der vorhergehenden Ansprüche,
**dadurch gekennzeichnet, dass**
die Kompressionsschicht (2) PO-Schaum umfasst oder hieraus hergestellt ist.

4. Kompressionspad (1) nach dem vorhergehenden Anspruch,
**dadurch gekennzeichnet, dass**
der PO-Schaum ein vernetzter PO-Schaum ist.

5. Kompressionspad (1) nach einem der vorhergehenden Ansprüche,
**dadurch gekennzeichnet, dass**
die Kompressionsschicht (2) PUR-Schaum, bevorzugt verdichteten PUR-Schaum, umfasst.

6. Kompressionspad (1) nach einem der vorhergehenden Ansprüche,
**dadurch gekennzeichnet, dass**
die Kompressionsschicht (2) Hochtemperatur-Schaum, bevorzugt Melaminharz-Schaum, umfasst.

7. Kompressionspad (1) nach einem der vorhergehenden Ansprüche,
**dadurch gekennzeichnet, dass**
die Kompressionsschicht (2) ein nicht-geschäumtes Material, bevorzugt ein Elastomer-Gummi, umfasst.

8. Kompressionspad (1) nach einem der vorhergehenden Ansprüche,
**dadurch gekennzeichnet, dass**
das Kompressionspad (1) wenigstens eine flächige Schutzschicht (4) umfasst, welche auf der ersten Seitenfläche (15) oder der zweiten Seitenfläche (15) der Kompressionsschicht (2) angeordnet ist, wobei das Kompressionspad (1) bevorzugt zwei flächige Schutzschichten (4) umfasst, wovon eine der zwei Schutzschichten (4) auf der ersten Seitenfläche (15) und die andere der zwei Schutzschichten (4) auf der zweiten Seitenfläche (16) der Kompressionsschicht (2) angeordnet ist.

9. Kompressionspad (1) nach dem vorhergehenden Anspruch,
**dadurch gekennzeichnet, dass**
die Schutzschicht (4) oder die Schutzschichten (4) aus einem Material auf mineralischer Basis hergestellt sind.

10. Kompressionspad (1) nach einem der beiden vorhergehenden Ansprüche,
**dadurch gekennzeichnet, dass**
die Schutzschicht (4) oder die Schutzschichten (4) Mica umfassen oder hieraus hergestellt sind.

11. Verfahren zur Herstellung eines Kompressionspads (1), welches folgende Schritte umfasst:
a. Bereitstellen einer Kompressionsschicht (2), mit einer Länge (L), einer Breite (B) und einer Dicke (D), wobei die Länge (L) und die Breite (B) ein Vielfaches der Dicke (D) betragen, wobei die Kompressionsschicht (2) eine erste Seitenfläche (15) und eine zweite Seitenfläche (16) aufweist, die jeweils von der Länge (L) und der Breite (B) aufgespannt werden;
b. Einbringen von Aussparungen (8) in die Kompressionsschicht (2) zur Beeinflussung der Drucksteifigkeit der Kompressionsschicht (2) in wenigstens einem vordefinierten makroskopischen Bereich (9, 10, 11) der ersten und/oder der zweiten Seitenfläche (15, 16), wobei sich die Aussparungen (8) von der ersten Seitenfläche (15) zu der zweiten Seitenfläche (16) erstrecken, wobei sich ein Mittelbereich (9) entlang zumindest eines Teils einer Mittellinie (7) zwischen zwei Längsseiten (5) der ersten und/oder zweiten Seitenfläche (15, 16) auf der ersten und/oder zweiten Seitenfläche (15, 16) erstreckt, und wobei sich Randbereiche (10) jeweils entlang zumindest eines Teils einer Längsseite (5) erstrecken, wobei die Aussparungen (8) derart angeordnet sind, dass die Anzahl der Aussparungen (8) und/oder die aufsummierte Querschnittsfläche der Aussparungen (8) von der Mittellinie (7) in Richtung der Längsseiten (5) abnimmt.

12. Verfahren nach dem vorhergehenden Anspruch,
**dadurch gekennzeichnet, dass**
das Verfahren zusätzlich die Schritte umfasst:
c1. Aufbringen einer Kleberschicht (3) auf die erste Seitenfläche (15) oder auf die zweite Seitenfläche (16) der Kompressionsschicht (2);
d1. Aufbringen einer Schutzschicht (4) auf die Kleberschicht (3) aus Schritt c1;
e1. Aufbringen einer Kleberschicht (3) auf die Schutzschicht (4) aus Schritt d1;
f1. Aufbringen einer Klebefolie auf der Kleberschicht (3) aus Schritt e1;
oder
c2. Aufbringen jeweils einer Kleberschicht (3) auf die erste Seitenfläche (15) und auf die zweite Seitenfläche (16) der Kompressionsschicht (2);
d2. Aufbringen jeweils einer Schutzschicht (4) auf die beiden Kleberschichten (3) aus Schritt c2;
e2. Aufbringen jeweils einer Kleberschicht (3) auf den beiden Schutzschichten (4) aus Schritt d2;
f2. Aufbringen jeweils einer Klebefolie auf den beiden Kleberschichten (3) aus Schritt e2.

13. Verfahren nach einem der beiden vorhergehenden Ansprüche,
**dadurch gekennzeichnet, dass**
die Kompressionsschicht (2), die Kleberschichten (3), die Schutzschicht (4) oder die Schutzschichten (4) und/oder die Klebefolie oder die Klebefolien abrollbar auf Rollen bereitgestellt werden und zum Aufbringen nacheinander aufeinander abgerollt und miteinander verpresst werden.

14. Verfahren nach einem der drei vorhergehenden Ansprüche,
**dadurch gekennzeichnet, dass**
die Kleberschichten (3) auf einer Trägerfolie bereitgestellt werden, welche nach dem Aufbringen der Kleberschichten (3) wieder entfernt wird.

15. Batteriepack (12) mit wenigstens einem Kompressionspad (1) nach einem der Ansprüche 1 bis 10, wobei das Batteriepack (12) einzelne miteinander elektrisch verbundene Batteriezellen (13) umfasst, die mittels der Kompressionspads (1) beabstandet zueinander angeordnet sind.

## Claims

1. A compression pad (1) for arranging battery cells (13) in a battery pack (12) in a spaced manner, comprising a planar compression layer (2) having a length (L), a width (B), and a thickness (D), the length (L) and the width (B) being a multiple of the thickness (D); the compression layer (2) comprising a first lateral surface (15) and a second lateral surface (16), which are each spanned by the length (L) and the width (B); the compression layer (2) comprising a plurality of macroscopic regions (9, 10, 11) that extend on the first and/or second lateral surfaces (15, 16) and have differing levels of compressive rigidity; the levels of compressive rigidity preferably being measured in an orthogonal direction with respect to the first and/or second lateral surfaces (15, 16); the compression layer (2), for the purpose of creating the regions (9, 10, 11) having differing levels of compressive rigidity, comprising cut-outs (8) that extend from the first lateral surface (15) to the second lateral surface (16); a central region (9) extending along at least a part of a center line (7) between two longitudinal sides (5) of the first and/or second lateral surfaces (15, 16) on the first and/or second lateral surfaces (15, 16); and edge regions (10) extending in each case along at least a part of a longitudinal side (5),
**characterized in that**
the cut-outs (8) are arranged such that the number of cut-outs (8) and/or the total cross-sectional area of the cut-outs (8) decreases from the center line (7) in the direction of the longitudinal sides (5).

2. The compression pad (1) according to the preceding claim,
**characterized in that**
the cut-outs (8) have an elongated shape and extend parallel to the longitudinal sides (5) of the compression layer (2).

3. The compression pad (1) according to any one of the preceding claims,
**characterized in that**
the compression layer (2) comprises or is made of PO foam.

4. The compression pad (1) according to the preceding claim,
**characterized in that**
the PO foam is a cross-linked PO foam.

5. The compression pad (1) according to any one of the preceding claims, **characterized in that**
the compression layer (2) comprises PUR foam, preferably compressed PUR foam.

6. The compression pad (1) according to any one of the preceding claims, **characterized in that**
the compression layer (2) comprises high-temperature foam, preferably melamine resin foam.

7. The compression pad (1) according to any one of the preceding claims, **characterized in that**
the compression layer (2) comprises a non-foamed material, preferably an elastomer rubber.

8. The compression pad (1) according to any one of the preceding claims, **characterized in that**
the compression pad (1) comprises at least one planar protective layer (4) which is arranged on the first lateral surface (15) or the second lateral surface (15) of the compression layer (2), the compression pad (1) preferably comprising two planar protective layers (4), with one of the two protective layers (4) being arranged on the first lateral surface (15) and the other of the two protective layers (4) being arranged on the second lateral surface (16) of the compression layer (2).

9. The compression pad (1) according to the preceding claim,
**characterized in that**
the protective layer (4) is or the protective layers (4) are made of a mineral-based material.

10. The compression pad (1) according to any one of the two preceding claims,
**characterized in that**
the protective layer (4) comprises or the protective layers (4) comprise mica or are made thereof.

11. A method for producing a compression pad (1), comprising the following steps:
a. providing a compression layer (2) having a length (L), a width (B), and a thickness (D), the length (L) and the width (B) being a multiple of the thickness (D); and the compression layer (2) comprising a first lateral surface (15) and a second lateral surface (16), which are each spanned by the length (L) and the width (B); and
b. introducing cut-outs (8) into the compression layer (2) for influencing the compressive rigidity of the compression layer (2) in at least one predefined macroscopic region (9, 10, 11) of the first and/or second lateral surfaces (15, 16); the cut-outs (8) extending from the first lateral surface (15) to the second lateral surface (16); a central region (9) extending along at least a part of a center line (7) between two longitudinal sides (5) of the first and/or second lateral surfaces (15, 16) on the first and/or second lateral surfaces (15, 16); edge regions (10) extending in each case along at least a part of a longitudinal side (5); and the cut-outs (8) being arranged such that the number of cut-outs (8) and/or the total cross-sectional area of the cut-outs (8) decreases from the center line (7) in the direction of the longitudinal sides (5).

12. The method according to the preceding claim,
**characterized in that**
the method additionally comprises the following steps:
c1. applying an adhesive layer (3) to the first lateral surface (15) or to the second lateral surface (16) of the compression layer (2);
d1. applying a protective layer (4) to the adhesive layer (3) from step c1;
e1. applying an adhesive layer (3) to the protective layer (4) from step d1; and
f1. applying an adhesive film to the adhesive layer (3) from step e1;
or
c2. applying an adhesive layer (3) to both the first lateral surface (15) and the second lateral surface (16) of the compression layer (2);
d2. applying a protective layer (4) to each of the two adhesive layers (3) from step c2;
e2. applying an adhesive layer (3) to each of the two protective layers (4) from step d2; and
f2. applying an adhesive film to each of the two adhesive layers (3) from step e2.

13. The method according to any one of the two preceding claims,
**characterized in that**
the compression layer (2), the adhesive layers (3), the protective layer (4) or the protective layers (4) and/or the adhesive film or the adhesive films are provided on rolls from which these can be unrolled and, for application, are consecutively unrolled onto one another and pressed together.

14. The method according to any one of the three preceding claims,
**characterized in that**
the adhesive layers (3) are provided on a carrier film, which is removed again after the adhesive layers (3) have been applied.

15. A battery pack (12) comprising at least one compression pad (1) according to any one of claims 1 to 10, wherein the battery pack (12) comprises individual battery cells (13) that are electrically connected to one another and arranged spaced apart from one another by means of the compression pad (1).

## Revendications

1. Coussinet de compression (1) destiné à agencer des cellules de batterie (13) dans un bloc-batterie (12) d'une manière espacée, comprenant une couche de compression plane (2) ayant une longueur (L), une largeur (B) et une épaisseur (D), la longueur (L) et la largeur (B) étant un multiple de l'épaisseur (D) ; la couche de compression (2) comprenant une première surface latérale (15) et une seconde surface latérale (16), qui sont chacune couvertes par la longueur (L) et la largeur (B) ; la couche de compression (2) comprenant une pluralité de régions macroscopiques (9, 10, 11) qui s'étendent sur les première et/ou seconde surfaces latérales (15, 16) et ont des niveaux différents de rigidité en compression ; les niveaux de rigidité en compression étant de préférence mesurés dans une direction orthogonale par rapport aux première et/ou seconde surfaces latérales (15, 16) ; la couche de compression (2), à des fins de création des régions (9, 10, 11) ayant des niveaux différents de rigidité en compression, comprenant des découpes (8) qui s'étendent depuis la première surface latérale (15) jusqu'à la seconde surface latérale (16) ; une région centrale (9) s'étendant le long d'au moins une partie d'une ligne centrale (7) entre deux côtés longitudinaux (5) des première et/ou seconde surfaces latérales (15, 16) sur les première et/ou seconde surfaces latérales (15, 16) ; et des régions de bord (10) s'étendant dans chaque cas le long d'au moins une partie d'un côté longitudinal (5),
**caractérisé en ce que**
les découpes (8) sont agencées de telle sorte que le nombre de découpes (8) et/ou l'aire de section transversale totale des découpes (8) diminue depuis la ligne centrale (7) dans la direction des côtés longitudinaux (5).

2. Coussinet de compression (1) selon la revendication précédente,
**caractérisé en ce que**
les découpes (8) ont une forme allongée et s'étendent parallèlement aux côtés longitudinaux (5) de la couche de compression (2).

3. Coussinet de compression (1) selon l'une quelconque des revendications précédentes,
**caractérisé en ce que**
la couche de compression (2) comprend ou est fabriquée en mousse de PO.

4. Coussinet de compression (1) selon la revendication précédente, **caractérisé en ce que**
la mousse de PO est une mousse de PO réticulée.

5. Coussinet de compression (1) selon l'une quelconque des revendications précédentes,
**caractérisé en ce que**
la couche de compression (2) comprend de la mousse de PUR, de préférence une mousse de PUR compressée.

6. Coussinet de compression (1) selon l'une quelconque des revendications précédentes,
**caractérisé en ce que**
la couche de compression (2) comprend une mousse haute température, de préférence de la mousse de résine de mélamine.

7. Coussinet de compression (1) selon l'une quelconque des revendications précédentes,
**caractérisé en ce que**
la couche de compression (2) comprend un matériau non expansé, de préférence un caoutchouc élastomère.

8. Coussinet de compression (1) selon l'une quelconque des revendications précédentes,
**caractérisé en ce que**
le coussinet de compression (1) comprend au moins une couche de protection plane (4) qui est agencée sur la première surface latérale (15) ou la seconde surface latérale (15) de la couche de compression (2), le coussinet de compression (1) comprenant de préférence deux couches de protection planes (4), l'une des deux couches de protection (4) étant agencée sur la première surface latérale (15) et l'autre des deux couches de protection (4) étant agencée sur la seconde surface latérale (16) de la couche de compression (2).

9. Coussinet de compression (1) selon la revendication précédente,
**caractérisé en ce que**
la couche de protection (4) est ou les couches de protection (4) sont fabriquées en un matériau à base minérale.

10. Coussinet de compression (1) selon l'une quelconque des deux revendications précédentes,
**caractérisé en ce que**
la couche de protection (4) comprend ou les couches de protection (4) comprennent du mica ou sont fabriquées en celui-ci.

11. Procédé de production d'un coussinet de compression (1), comprenant les étapes suivantes :
a. se munir d'une couche de compression (2) ayant une longueur (L), une largeur (B) et une épaisseur (D), la longueur (L) et la largeur (B) étant un multiple de l'épaisseur (D) ; et la couche de compression (2) comprenant une première surface latérale (15) et une seconde surface latérale (16), qui sont chacune couvertes par la longueur (L) et la largeur (B) ; et
b. introduire des découpes (8) dans la couche de compression (2) pour influencer la rigidité en compression de la couche de compression (2) dans au moins une région macroscopique prédéfinie (9, 10, 11) des première et/ou seconde surfaces latérales (15, 16) ; les découpes (8) s'étendant depuis la première surface latérale (15) jusqu'à la seconde surface latérale (16) ; une région centrale (9) s'étendant le long d'au moins une partie d'une ligne centrale (7) entre deux côtés longitudinaux (5) des première et/ou seconde surfaces latérales (15, 16) sur les première et/ou seconde surfaces latérales (15, 16) ; des régions de bord (10) s'étendant dans chaque cas le long d'au moins une partie d'un côté longitudinal (5) ; et les découpes (8) étant agencées de telle sorte que le nombre de découpes (8) et/ou l'aire de section transversale totale des découpes (8) diminue depuis la ligne centrale (7) dans la direction des côtés longitudinaux (5).

12. Procédé selon la revendication précédente, **caractérisé en ce que** le procédé comprend de plus les étapes suivantes :
c1. appliquer une couche adhésive (3) à la première surface latérale (15) ou à la seconde surface latérale (16) de la couche de compression (2) ;
d1. appliquer une couche de protection (4) à la couche adhésive (3) de l'étape c1 ;
e1. appliquer une couche adhésive (3) à la couche de protection (4) de l'étape d1 ; et
f1. appliquer un film adhésif à la couche adhésive (3) de l'étape e1 ;
ou
c2. appliquer une couche adhésive (3) à la fois à la première surface latérale (15) et à la seconde surface latérale (16) de la couche de compression (2) ;
d2. appliquer une couche de protection (4) à chacune des deux couches adhésives (3) depuis l'étape c2 ;
e2. appliquer une couche adhésive (3) à chacune des deux couches de protection (4) de l'étape d2 ; et
f2. appliquer un film adhésif à chacune des deux couches adhésives (3) depuis l'étape e2.

13. Procédé selon l'une quelconque des deux revendications précédentes,
**caractérisé en ce que**
la couche de compression (2), les couches adhésives (3), la couche de protection (4) ou les couches de protection (4) et/ou le film adhésif et/ou les films adhésifs sont pourvus sur des rouleaux depuis lesquels ces derniers peuvent être déroulés et, pour l'application, sont déroulés de manière consécutive l'un sur l'autre et sont pressés ensemble.

14. Procédé selon l'une quelconque des trois revendications précédentes,
**caractérisé en ce que**
les couches adhésives (3) sont pourvues sur un film de support, qui est retiré à nouveau après que les couches adhésives (3) ont été appliquées.

15. Bloc-batterie (12) comprenant au moins un coussinet de compression (1) selon l'une quelconque des revendications 1 à 10, dans lequel le bloc-batterie (12) comprend des cellules de batterie individuelles (13) qui sont connectées électriquement les unes aux autres et sont agencées de manière espacée les unes des autres au moyen du coussinet de compression (1).
